# EUROPEAN PATENT APPLICATION

(11) **EP 0 968 878 A2**
(43) Date of publication of application: **05.01.2000**
(21) Application number: 99201675.8
(22) Date of filing: 27.05.1999
(51) Int. Cl.: B60P 3/20

(54) **Device for the sealing of compartments in tanks for the transport of hydrocarbons**

(30) Priority: 29.05.1998 ES 9801405 U
(71) Applicant: Compania Espanola de Petroleos, S.A., 28042 Madrid (ES)
(72) Inventor: Gomez Martinez, José Manuel, 03002 Alicante (ES)
(74) Representative: Ungria Lopez, Javier

(57) **Abstract**

Device for the sealing of compartments in tanks for the transport of hydrocarbons, each one of the compartments being connected by its respective pipes ending in standard couplings that are closed by a cap. The different couplings (4) for the charge and discharge of the tank (7), of each one of the compartments (6), some contact sensors (1) that pass through the dust caps (2) of the couplings and that establish the sealing upon being pressed by the inside stopper of the respective coupling, generating an electronic signal that is stored in an automaton and that cannot be deleted, being reflected in a sealing indicator light of the corresponding compartment (6), on the control panel (13). The breaking of the seal is done by removing the dust cap (2) in order to connect a discharge hose, keeping the electronic signal generated due to the lack of contact of the sensors (1) corresponding to the compartments (6) in the automaton in such a way that the information cannot be deleted and is shown on the control panel (13).

## Description

### OBJECT OF THE INVENTION

As expressed in the title of this specification, the present invention refers to a device for the sealing of compartments in tanks for the transport of hydrocarbons, provided in order to make it possible to establish a seal in the outside valves of the charge and discharge pipes of the compartments, electronically and automatically. This implies noteworthy relevant and advantageous characteristics with regard to the means and devices used at present.

### BACKGROUND OF THE INVENTION

Nowadays, in the marketing of petroleum products manual mechanical seals are established with lead seals that must be broken in order to operate the valves that allow the discharge of the tank. The sealing process is done after the charging process, in the supply installations, a task which is done by the staff of the supplier, in order to justify to the consignee that the product has not been manipulated until it has reached the consignee who is the one that has to break the seal. Therefore, nowadays the sealing is done mechanically and manually.

### DESCRIPTION OF THE INVENTION

In broad outline, the device for the sealing of compartments in tanks for the transport of hydrocarbons, that constitutes the object of the invention, has some contact sensors that establish the sealing, sensors which are placed in the dust caps of the standard API (American Petroleum Institute) couplings for the charge and discharge of the tank with some characteristics stipulated by this specific institute for the transport of petroleum.

The sensors are mounted in respective perforations of said dust caps, making contact with the inside stopper of the coupling, being kept in their position by the cams that keep the dust caps fastened to the coupling, in such a way that in said connection the leak tightness of the coupling with the cap is established. In spite of the perforation that is made in order to install the sensor, the leak tightness is re-established upon placing O-ring seals in the sensor. This sensor is of intrinsic safety upon being in possible contact with the fuel.

The establishment of the sealing is done by means of an electronic signal taken from the connection base of the high level cut-off sensors for avoiding overfilling of the compartments of the tanks, taking advantage of the fact that this connecting operation is obligatorily done one-to-one with the charging process, this being reflected on a sealing indicator light of the cited compartment, on the control panel, or by an electronic signal taken from the low level sensors located in the bottom of each compartment that indicate that the compartment is empty, as a necessary condition to carry out the sealing, taking advantage of the fact that this empty state is obligatory as a state prior to the charging process, which is also reflected by a sealing indicator light of the cited compartment on the control panel, or else the combination of both signals as necessary conditions in order to proceed with the sealing.

The breaking of the seal is done when the dust cap is removed in order to be able to connect the discharge hose itself, this condition being reflected by the light for indicating the sealing of the compartment.

The functioning is done by means of a programmable logical automaton. The philosophy of this system is not to prevent the breaking of the seal of the compartment, but rather to leave proof of this incident, in such a way that the information cannot be deleted and thus the consignee will be aware that manipulation has taken place before the destination has been reached.

The device acts automatically and completely autonomously in accordance with the charging and discharging processes, supplying its information to the operators, but inviolable to any outside manipulation, leaving proof of any manipulation of the product.

In order to complete the description that is going to be made hereinafter and to provide a better understanding of the characteristics of the invention, a set of drawings on the basis of whose figures the innovations and advantages of the device object of the invention will be more easily understood, is attached to the present specification.

### BRIEF DESCRIPTION OF THE DRAWINGS

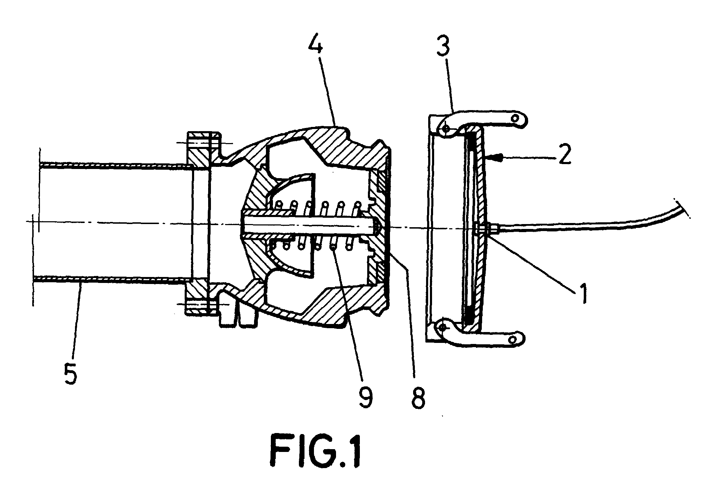

Figure 1 is a longitudinal sectional view that shows an exploded view of an API coupling and the dust cap carrying the sensor that defines the device for the sealing of compartments in tanks for the transport of hydrocarbons, in accordance with the invention.

Figure 2 is a cross section view of the tank in whose bottom the piping ended in the API coupling with the dust cap is located, also including the high level feed connection base installation and the control that the automaton carries out.

Figure 3 shows a practical application of the different components of the device of the invention, to a typical cistern tank with various compartments.

### DESCRIPTION OF THE PREFERRED EMBODIMENT

Making reference to the numbering used in the figures, we can see how the device for the sealing of compartments in tanks for the transport of hydrocarbons, that the invention proposes, consists of providing for the placement of some contact sensors, generally referred to as number (1) located in a perforation existing in the respective dust cap (2) that is blocked by means of the cams (3) in the free end of the API coupling (4) of the charge and discharge pipes (5) of the respective compartment (6) of the tank (7). The sensor (1) establishes contact with the inside stopper (8) of the coupling (4), aided by the spring (9).

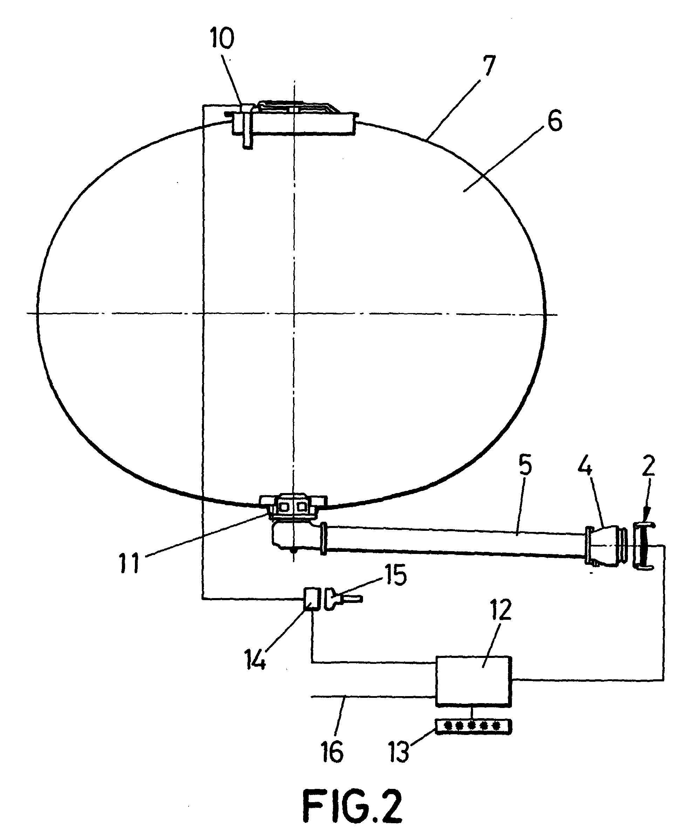

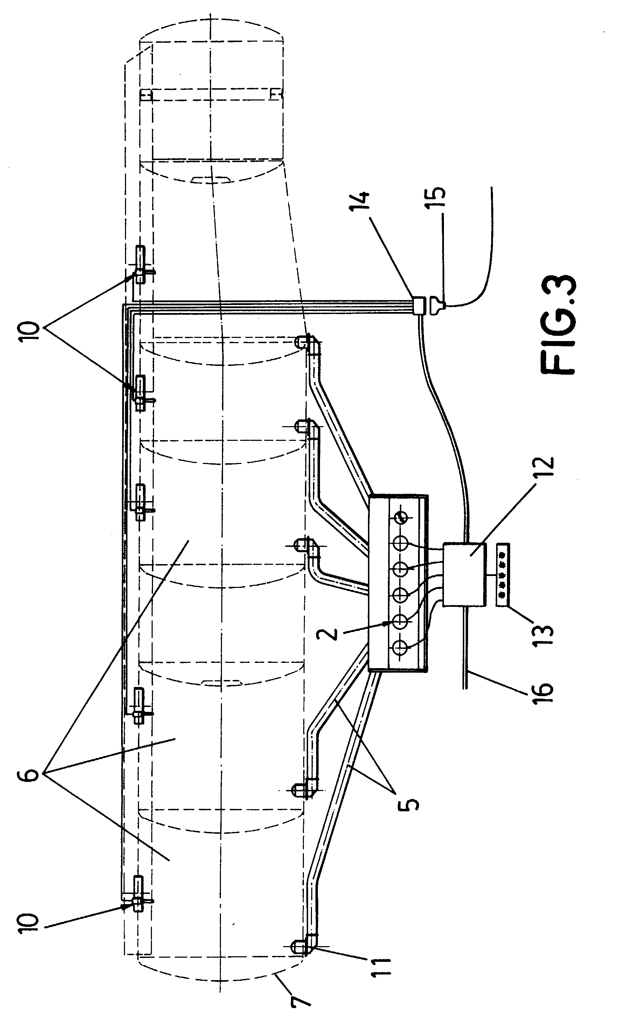

The "sealing" condition is established, by means of an electronic signal taken from the connection base of the high level limiting sensors (10), as shown in figures 2 and 3.

The pipings (5) that end in the API couplings (4) are connected to the bottom valves (11) of the respective compartments (6). The sensors (1) of the different dust caps (2) (see figure 3) are controlled from the automaton (12), this being reflected on the control panel (13).

Reference (14) designates the high level feed connection base and reference (15) designates the connection plug in the loading platform. Reference (16) designates the feed cable from the battery.

When the operator disconnects the caps (2) from the different API couplings (4) linked to the respective compartments (6) of the tank (7), in order to connect the discharge hoses, the breaking of the seal is reflected on the control panel (13), being inviolable to any outside manipulation since the information cannot be deleted, thus confirming the manipulation of the product, as we have indicated above.

## Claims

1. Device for the sealing of compartments in tanks for the transport of hydrocarbons, each one of the compartments being connected by its bottom valves to respective pipes ending in standard couplings that are closed by a cap, characterized in that the different couplings (4) for the charge and discharge of the tank (7), of each one of the compartments (6) some contact sensors (1) that pass through the dust caps (2) of the couplings and that establish the sealing upon being pressed by the inside stopper of the respective coupling, generating an electronic signal that is stored in an automaton and that cannot be deleted, being reflected in a light for indicating sealing of the corresponding compartment (6), on the control panel (13); all so that the breaking of the seal is done by removing the dust cap (2) in order to connect a discharge hose, the electronic signal generated due to the lack of contact of the sensors (1) corresponding to the compartments (6) being kept in the automaton in such a way that the information cannot be deleted and is shown on the control panel (13).

2. Device for the sealing of compartments in tanks for the transport of hydrocarbons, according to claim 1, characterized in that the electronic signal is taken from the connection base (14) of the high level cut-off sensors (10) for preventing the overfilling of the cited compartments (6), taking advantage of the fact that this connecting operation is obligatorily done one-to-one with the charging process.

3. Device for the sealing of compartments in tanks for the transport of hydrocarbons, according to claim 1, characterized in that the electronic signal is taken from low level sensors installed in the bottom of each compartment in order to indicate that the same is empty, taking advantage of the fact that that this empty state is obligatory as prior to the charging process.

4. Device for the sealing of compartments in tanks for the transport of hydrocarbons, according to the above claims, characterized in that the electronic signal is taken combining copulatively the signal of the connection base of the high level sensors of the compartments together with the signal coming from the low level sensors indicating that the compartment to be sealed is empty.

5. Device for the sealing of compartments in tanks for the transport of hydrocarbons, according to the above claims, characterized in that the control is done by means of a programmable logical automaton that allows the storage and control of the information received from the sensors (10), the information being inviolable to any outside manipulation.
